Europäisches Patentamt

(19) European Patent Office

Office européen des brevets

(11) Veröffentlichungsnummer : **0 121 143**
**B1**

(12) **EUROPÄISCHE PATENTSCHRIFT**

(45) Veröffentlichungstag der Patentschrift :
02.12.87

(51) Int. Cl.⁴ : **B 01 D 33/00**, B 01 D 23/10,
B 01 D 23/24

(21) Anmeldenummer : 84102503.4

(22) Anmeldetag : 08.03.84

(54) Verfahren und Vorrichtung zum Filtrieren feststoffbeladener Flüssigkeiten.

(30) Priorität : 09.03.83 DE 3308287

(43) Veröffentlichungstag der Anmeldung :
10.10.84 Patentblatt 84/41

(45) Bekanntmachung des Hinweises auf die Patenterteilung : 02.12.87 Patentblatt 87/49

(84) Benannte Vertragsstaaten :
AT CH DE FR GB IT LI NL SE

(56) Entgegenhaltungen :
EP-A- 0 085 779
CH-A-   170 459
DE-A- 2 226 050
DE-C-   649 188
DE-C-   721 643
GB-A- 2 084 041
US-A- 2 057 887
US-A- 3 677 413
US-A- 3 965 013
US-A- 4 126 546

(73) Patentinhaber : Bergwerksverband GmbH
Franz-Fischer-Weg 61
D-4300 Essen 13 (DE)

(72) Erfinder : Ludwig, Gerhard, Dr.
Pregelweg 9
D-3004 Isernhagen 2 (DE)
Erfinder : Simon, Jòzsef, Dr. Dipl.-Ing.
Am Kamp 15 N
D-3014 Laatzen 1 (DE)
Erfinder : Zörkendörfer, Eckhard, Dr. Dipl.-Chem.
Bergiusstrasse 11 A
D-3000 Hannover 51 (DE)
Erfinder : Gappa, Günther, Dipl.-Ing.
Weskampstrasse 17
D-4650 Gelsenkirchen-Buer (DE)
Erfinder : Vaupel, Knut, Dipl.-Ing.
Dreigarbenfeld 19
D-4300 Essen (DE)
Erfinder : Klein, Jürgen, Dr. Dipl.-Phys.
Hülscherfeld 32
D-4300 Essen (DE)

## Beschreibung

Die Erfindung betrifft ein Verfahren und eine Vorrichtung zur Abtrennung von Feststoffteilchen aus Trüben.

Beim Reinigen vor allem schwermetallhaltiger Industrie-, Prozeß- oder Abwässer mit sowohl festen als auch gelösten Inhaltsstoffen gelingt eine gleichzeitige Entfernung aller, die Umwelt belastenden Inhaltsstoffe in der Regel nicht. Eine Entfernung des in der Flüssigkeit suspendierten (groben und feinen) Feststoffes ermöglicht hingegen eine vergleichsweise problemlose Weiterreinigung der Flüssigkeit und verbessert die Rückgewinnung etwaiger Wertstoffe aus den Feststoffen beträchtlich.

Feststoffe können aus Flüssigkeiten durch Sedimentation und anschließendes Dekantieren der Flüssigkeiten oder durch zurückhalten der Feststoffpartikel aus einem Flüssigkeitsstrom an einem Sieb oder ähnlichem in einem Filtrationsapparat abgeschieden werden. Während die sedimentation außerordentlich viel Zeit in Anspruch nimmt und — zumindest bei sehr unterschiedlichen Partikelgrößen und/oder -dichten — selten quantitativ erfolgt, sind die Filtrationsmethoden bei geringer Feststoffbeladung einer Flüssigkeit von z. B. weniger als 1 Gew.-% sehr aufwendig, da eine ausreichende Filtrationsrate große Filterflächen erfordert. Dies verursacht hohe Investitions- und Prozeßkosten, letzteres um die bei der Filtration erforderlichen Differenzdrücke aufrecht zu erhalten, den Filterkuchen zu entfernen sowie den Filter zurückzuspülen. Sowohl die Sedimentation als auch die meisten Filtrationsverfahren sind diskontinuierliche Vorgänge, so daß von Zeit zu Zeit der Reinigungsprozeß unterbrochen und die zu reinigende Trübe einem parallel geschalteten Trennapparat zugeführt werden muß, wodurch sich die Investitionskosten abermals erhöhen.

Es sind auch schon Filtrationsverfahren, insbesondere zur Abwasserreinigung bekannt, die kontinuierlich arbeiten, z. B. aus der US-A-2 057 887 sowie aus der US-A-4 126 546. Bei diesen Verfahren wird ein festes, körniges Material, z. B. Sand, als Filtermaterial verwendet, das in einem Behälter als Wanderschicht abwärts geführt wird, während die feststoffhaltige Flüssigkeit im Gegenstrom aufwärts geführt wird. Das feststoffbeladene Filtermaterial wird am Behälterboden abgezogen und innerhalb oder außerhalb des Behälters nach oben gefördert und in einer Waschvorrichtung von den Feststoffen gesäubert, wobei ein Teil des Filtratwassers als Waschflüssigkeit dient. Bei diesen kontinuierlich betriebenen Filtrationsverfahren werden die Fein- und Feinstanteile der Feststoffe nur unvollständig entfernt. Auf eine schonende Regeneration braucht bei solchen festen Filtermaterialien in der Regel nicht geachtet zu werden.

Der Erfindung liegt die Aufgabe zugrunde, ein Verfahren und eine Vorrichtung zur Abtrennung von Feststoffteilchen aus Trüben bereitzustellen, welchen die vorerwähnten Nachteile der bekannten Sedimentations- und Filterverfahren nicht anhaften, sondern die einen vergleichsweise hohen Abscheidegrad sowohl der groben als auch der feinen Feststoffe mit relativ geringem Aufwand und eine schonende Regeneration und Wiederverwendung des Filters bzw. Filtermaterials bei kontinuierlicher Arbeitsweise ermöglichen ; die Partikelgröße der zu filtrierenden Feinanteil der Feststoffe soll dabei auch den Bereich von etwa 1-50 Mikrometern einschließen. Erwünscht ist auch eine einfache Möglichkeit, nachfolgend wertvolle Inhaltsstoffe der Trübe rückzugewinnen, insbesondere aus schwermetallhaltigen Industrie-, Prozeß- und Abwässern.

Die Aufgabe wird hinsichtlich eines Verfahrens der eingangs genannten Art durch die im Anspruch 1 niedergelegten Verfahrensschritte gelöst. Bei diesem Prozeß werden die groben Feststoffpartikel der Aufgabetrübe in zwei Stufen vorabgeschieden und die feineren Feststoffpartikel aus der vorgereinigten Trübe an der äußeren und zum Teil an der inneren Oberfläche eines aus Schwarztorf oder Torfgemischen hergestellten porösen Granulates festgehalten.

Durch die Erfindung wird — auch bei großen auf das Granulatvolumen oder -gewicht bezogenen Filtrationsleistungen — eine einwandfreie und praktisch vollständige, kontinuierliche Filtration der feinen Feststoffanteile und gleichzeitig eine maximale Feststoffbeladung des porösen Granulates ermöglicht. Zur Anlagerung der Feinanteile an das poröse Granulat wird dieses im Gegenstrom zur Trübe durch einen einfachen zylindrischen Filtrationsapparat aufgrund des Eigengewichtes geleitet (Wanderschicht).

Aufgrund der im wesentlichen mechanischen Filterwirkung des Granulates ist es möglich, dieses von den anhaftenden Feststoffpartikeln wieder zu befreien und erneut dem Filtrationsprozeß zuzuführen. Das gereinigte (regenerierte) Granulat wird der Granulatschicht kontinuierlich aufgegeben und das beladene Granulat aus ihr kontinuierlich abgezogen. Der Abrieb wird durch frisches (neues) Granulat ersetzt. — Durch diesen Wanderschicht-Prozeß werden die vorteilhaften Filtrationseigenschaften granulierter poröser Feststoffe mit einer Verfahrenstechnik gekoppelt, die bisher nur für Adsorptionsprozesse mit im wesentlichen feststofffreien Flüssigkeiten verwendet wurde. Dazu wird eine kostengünstige Regeneration und Wiederverwendung des Granulates ermöglicht.

Das beladene, aus dem Filtrationsapparat abgezogene Granulat wird durch Spülen regeneriert, wobei bevorzugt filtrierte Flüssigkeit aus dem Klarlauf des Filtrationsprozesses verwendet wird. Das Reinigen des beladenen Granulates durch Spülen wird dadurch besonders wirkungsvoll unterstützt, daß das beladene Granulat in einem pulsierenden Flüssigkeitsstrom oder Drei-Phasen-Strom zu der Spülvorrichtung gefördert wird, wobei bereits ein Teil der am Granulat anhaftenden Feststoffpartikel durch pulsationsbedingte Scherkräfte abgetrennt werden (Förderwaschung).

Ein gleichmäßiger Filtrationsbetrieb in der Granulatschicht wird durch vorheriges Entgasen der Trübe und Vorabscheiden relativ grober, also besonders großer und/oder spezifisch besonders schwerer Trübepartikel erreicht. Hierdurch werden Entgasungsvorgänge vermieden, die eine partielle Zerstörung des Filteraufbaus verursachen, somit eine Erhöhung der Wandergeschwindigkeit und dadurch bedingte verringerte Kapazitätsauslastung beim Filtrieren hervorrufen.

Der Klarlauf des erfindungsgemäßen Filtrationsverfahrens kann nunmehr kontinuierlich von gelösten Metallen — bevorzugt durch Ionenaustausch — befreit werden.

Aus Schwarztorf oder Torfgemischen hergestellte poröse Granulate haben sich in Versuchen als sehr wirkungsvoll herausgestellt. Natürlich vorkommender Schwarztorf ist ein stark zersetzter Hochmoortorf und unaufbereitet als Filtermaterial völlig ungeignet, da sich im Filtrat Schlieren bilden würden und die Wasserdurchlässigkeit nur gering wäre. Um so überraschender ist es, daß sich ein aus Schwarztorf hergestelltes Granulat für den erfindungsgemäßen Prozeß sehr gut eignet. Das Herstellen von Torfgranulat ist an sich z. B. für die Verwendung im Gartenbau bekannt.

Die Granulate werden wie folgt hergestellt: Zunächst wird der Torf durch Fräsen gewonnen und anschließend gefroren ; unter der Frosteinwirkung weiten sich die Kapillaren und verändern sich die Kolloide, denen jedoch eine ausreichende Klebefähigkeit erhalten bleibt. Anschließend wird der Torf sehr gründlich zerkleinert und durchmischt. Beim Granulieren auf einem sich drehenden, geneigten Teller wird Wasser zugesprüht und so in dem Rohgranulat ein Wassergehalt von z. B. 73 % eingestellt. Beim anschließenden Trocknen bei z. B. 80 °C sinkt der Wassergehalt auf z. B 20 % und das Granulat verfestigt sich. Nach Absieben des Unter- und Überkorns erfolgt für die erfindungsgemäße Verwendung ein Benetzen des Granulates mit heißem Wasser, wodurch die im Granulat enthaltene Luft ausgetrieben und ein Quellen des Granulates hervorgerufen wird. Das so hergestellte und in dem später beschriebenen Ausführungsbeispiel verwendete Granulat entstammte dem Torf des Neudorf-Platendorfer Moores, einem stark zersetzten Hochmoortorf (Schwarztorf) mit einer Humosität nach v. Post von etwa H8. Das Granulat wies vor dem Benetzen eine Korngröße zwischen 1 und 2 mm auf.

Die der Erfindung zugrundeliegende Aufgabe wird hinsichtlich einer Vorrichtung zum Durchführen des erfindungsgemäßen Verfahrens wie folgt gelöst : Als Filtrationsapparat wird ein an sich bekannter Wanderschichtreaktor mit einem oberen Zulauf für frisches Granulat, einem Abzug im unteren Bereich des Auslauftrichters für beladenes Granulat, einem nach oben spitzen Anströmkegel mit einem flüssigkeitsdurchlässigen Kegelmantel, der innerhalb des Auslauftrichters angeordnet ist, als Zulauf für die zu filtrierende Flüssigkeit sowie einem Überlauf für den Klarlauf im höchsten Flüssigkeitsniveau des Reaktors verwendet. Ein solcher Apparat ist bisher lediglich beim adsorptiven Entfernen von in einer Flüssigkeit gelösten Stoffen, z. B. an Aktivkohlegranulat verwendet worden, wobei aber stets darauf zu achten war, daß der Adsorptionsmittelschicht nur eine feststofffreie Flüssigkeit zugeführt wurde (Deutsche Offenlegungsschriften 24 36 792, 24 37 745 und 25 09 432).

Zum Abtrennen der feinen Feststoffe vom Granulat dient eine dem Granulatauslauf des Wanderschichtreaktors nachgeordnete Siebrinne mit hintereinander angeordneten, auf die Siebrinne gerichteten Düsen für eine Spülflüssigkeit. Die Haftung der Feststoffpartikel aus der Trübe an dem Granulat hat sich nämlich als gerade so fest erwiesen, daß sie den Strömungskräften der Trübe im Filtrationsapparat zwar widersteht, nicht aber den aufschlagenden Spülflüssigkeitströpfchen, wenn das Granulat auf einer Siebrinne ausgebreitet und über diese geleitet wird. Besonders wirkungsvoll erweisen sich für die Granulatreinigung mehr als üblich ansteigend geneigte Vibrationssiebrinnen. Das Abtrennen (Abwaschen) des Feststoffes von dem Granulat mit Hilfe einer Siebrinne wird dadurch erheblich erleichtert, daß das aus dem Wanderschichtreaktor abgezogene feststoffbeladene Granulat mittels eines Drei-Phasen-Förder-Systems senkrecht zum Anfang der Siebrinne transportiert und hierbei mittels eines definierten, relativ großen Durchmessers des Förderrohres im Vergleich zur transportierenden Feststoffmenge eine pulsierende Feststofförderung erzeugt wird. Durch die Pulsation werden Scherkräfte wirksam, die einerseits einen Teil des anhaftenden Feinguts vom Granulat lösen, andererseits das Granulat selbst nur geringfügig mechanisch beanspruchen. Auf diese Weise kann gleichzeitig der Höhenunterschied der Flüssigkeitssäule im Wanderschichtreaktor ausgeglichen werden, so daß das gereinigte Granulat unmittelbar oder unter Zwischenschalten eines Puffergefäßes dem Wanderschichtreaktor wieder aufgegeben werden kann ; damit wird der förderungsbedingte Abriebverlust an Granulat erheblich vermindert.

Die Erfindung wird nachfolgend anhand eines in der Zeichnung dargestellten Ausführungsbeispiels des näheren erläutert. In der Zeichnung zeigen :

Figur 1 ein Blockschema der Prozeßschritte ;

Figur 2 eine schematische Darstellung einer Filtrationsanlage ;

Figur 3 eine Vibrationssiebrinne zum Teil im Schnitt sowie

Figur 4 einen Schnitt durch eine Vibrationssiebrinne gemäß Figur 3 entlang der Linie IV-IV.

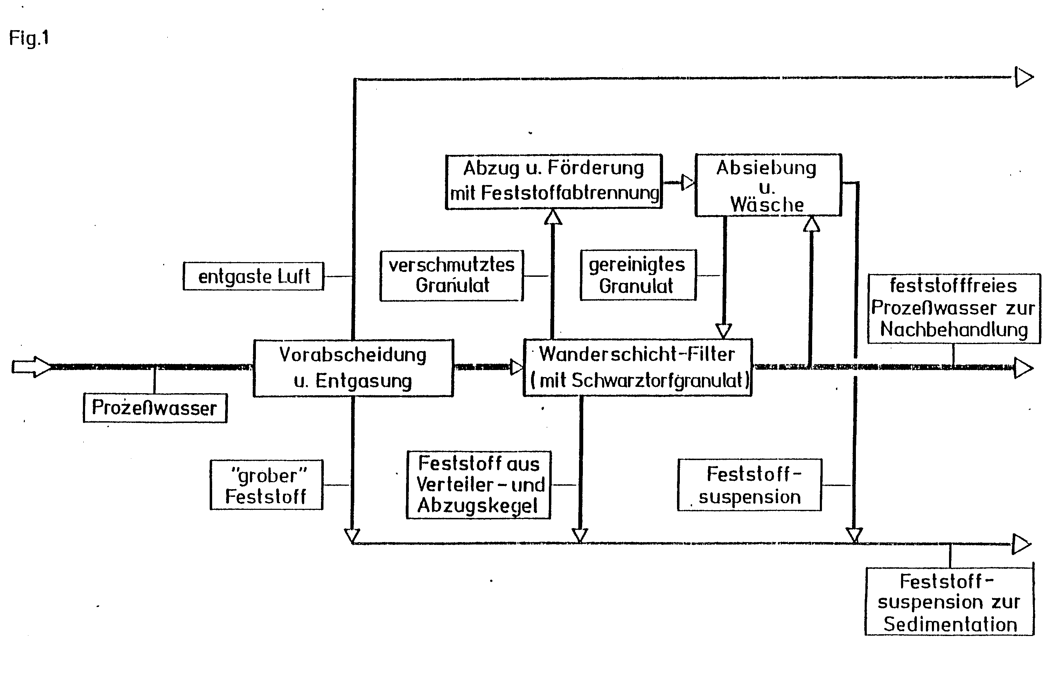

Der Verfahrensablauf beim Reinigen eines industriellen Abwassers (Prozeßwasser) ergibt sich ohne weiteres aus Figur 1, in der die einzelnen Verfahrensschritte in einem Blockschema angeführt sind.

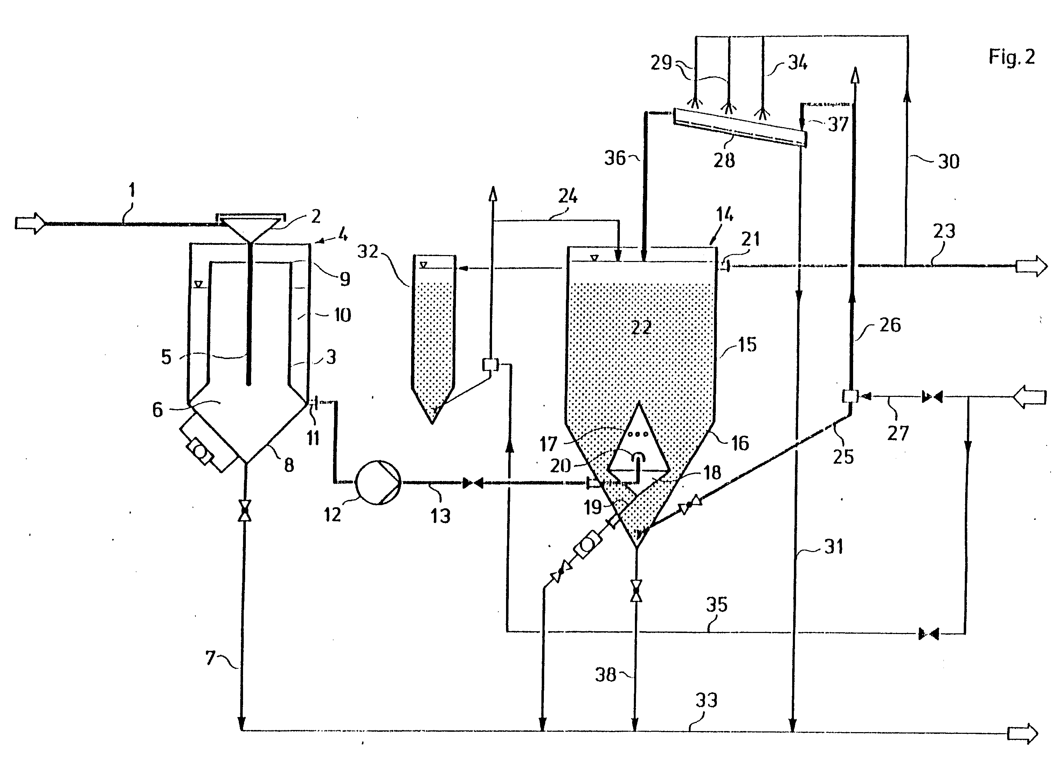

Gemäß Figur 2 gelangt das mit Feststoffen beladene Prozeßwasser (Trübe) über einen Trübezulauf 1 tangential in einen Einlauftrichter 2 und entgast hier unter Ausbilden eines rotierenden Filmes auf der Konusfläche des Trichters 2. Nachfolgend wird es über ein tief in einen Sedimentationsbehälter 3 hineinragendes zentrales Einlaufrohr 5 einem Sedimentationsapparat 4 zugeleitet. In einer querschnittserweiterten Sedimentationszone 6 unterhalb des Einlaufrohres 5 sammeln sich sedimentierte Feststoffpartikel, die im wesentlichen größer als 250 Mikrometer sind. Sie setzen sich in einem über einen Suspensionsabzug 7 entleerbaren Auslauftrichter 8 ab. Der Sedimentationsbehälter 3 besitzt einen — bevorzugt gezackten — Überlaufrand 9, über den die Trübe in einen als Pumpvorlage 10 dienenden äußeren Ringraum des Sedimentationsapparates 4 gelangt, von dessen Auslauf 11 die Trübe mit Hilfe einer Kreiselpumpe 12 sowie Regulier- und Rückschlagventilen über eine Druckleitung 13 in einen Wanderschichtreaktor 14 gelangt.

Der Wanderschichtreaktor 14 besteht aus einem — bevorzugt zylindrischen — Behälter 15 mit einem konischen Auslauftrichter 16, dessen Öffnungswinkel etwa 60° beträgt. Im oberen Drittel des Auslauftrichters 16 befindet sich ein koaxial nach oben ausgerichteter Verteiler- und Abzugskegel 17, mit ebenfalls einem Winkel (an der Spitze) von etwa 60° zwischen den Mantelflächen, in Form eines metallischen Hohlkegels, an dessen Basis sich ein trichterförmiges Sedimentationsgefäß 18 (Mittelgutabscheider) mit einem unteren, den Auslauftrichter 16 durchdringenden Mittelgutabzug 19 anschließt, so daß ein geschlossener Hohlkörper aus dem Verteiler- und Abzugskegel 17 und dem integrierten Sedimentationsgefäß 18 entsteht, aus dem sich absetzende weitere Partikel des Prozeßwassers (Mittelgut von etwa 250 bis 50 Mikrometer) diskontinuierlich abgezogen werden.

Die Druckleitung 13 durchdringt den Auslauftrichter 16 sowie das Sedimentationsgefäß 18 und bildet innerhalb des Verteiler- und Abzugskegels 17 eine zentrische, nach oben gerichtete, glockenförmig abgedeckte Einströmöffnung 20. Mehrere, an sich bekannte horizontale, nur andeutungsweise dargestellte Austrittsöffnungen im Verteiler- und Abzugskegel 17, bilden Lochreihen mit nach unten geneigten Abschirmblechen über den Austrittsöffnungen, so daß der Verteiler- und Abzugskegel 17 zwar flüssigkeitsdurchlässig ist, jedoch das Eindringen des nach unten zum Auslauftrichter 16 wandernden Granulats aus dem Behälter 15 in den Verteiler- und Abzugskegel 17 verhindert wird. Die Lochdichte und -größe auf dem Kegelmantel, die Spitzenwinkel des Verteiler- und Abzugskegels 17 und des Auslauftrichters 16 sowie die Größe des zwischen ihnen gebildeten Ringspaltes richten sich nach den zu erwartenden Strömungsdaten und Eigenschaften der zu behandelnden Flüssigkeit sowie des Granulates, um eine gleichmäßige Verteilung der aufgegebenen Trübe über den Filterquerschnitt zu gewährleisten und gleichzeitig das Granulat ebenfalls gleichmäßig nach unten abfließen zu lassen (Wanderschicht).

Der Behälter 15 weist einen Überlauf 21 oberhalb der Granulatschicht 22 auf, über den der Klarlauf in einen Filtratauslauf 23 abströmt.

Der Wanderschichtreaktor 14 wird von oben über einen Granulatzulauf 24 aus einem Vorratsbehälter 32 mit neuem Granulat beaufschlagt, welches zusammen mit regeneriertem, im Kreislauf geführten Granulat, das über die Granulataufgabe 36 zugeführt wird, die nach unten wandernde Granulatschicht 22 bildet. In den Granulatzulauf 24 mündet eine Fördergasleitung 35 ein.

Unterhalb des Sedimentationsgefäßes 18 ist an den Auslauftrichter 16 eine schräg nach oben gerichtete, in eine vertikale Förderleitung 26 übergehende Ansaugleitung 25 angeschlossen. In dieser wird beladenes Granulat in dichter Suspension aus dem Behälter 15 angesaugt und zum unteren Ende der Förderleitung 26 transportiert, wo die Suspension über eine Fördergasleitung 27 in an sich bekannter Weise mit einer regelbaren Menge an Fördergas zwecks Bildung einer Drei-Phasen-Mischung beaufschlagt wird. Die Dichte dieser Drei-Phasen-Mischung wird derart eingestellt, daß eine Förderhöhe erreicht wird, die genügend oberhalb der Höhe des Flüssigkeitsstandes des Überlaufes 21 des Wanderschichtreaktors 14 liegt. Zum Erzielen einer pulsierenden Förderung, die eine Scherwirkung auf das Granulat ausübt, weist die Forderleitung 26 für den Fall des nachfolgenden Ausführungsbeispiels eine Höhe von 1,4 m und einen Durchmesser von 0,03 m auf.

Der Auslauf 37 der Förderleitung 26 liegt oberhalb des Fußpunktes einer um 12° aufwärts geneigten, elektrisch betriebenen Vibrationssiebrinne 28 mit einer Rinnenlänge von 0,5 m und einer Rinnenbreite von 0,05 m. Mehrere Fächer-Waschdüsen 29 am Ende einer Spülflüssigkeitsleitung 30 ermöglichen das Reinigen des auf der Siebrinne 28 aufwärts geförderten Granulates von den ihm anhaftenden Partikeln aus der Trübe, welche durch den Siebboden gespült und über einen Suspensionsablauf 31 zusammen mit der Spül- und Förderflüssigkeit sowie dem Abrieb des Granulates abgezogen werden. Das so gereinigte Granulat gelangt vom oberen Siebende wieder in den Behälter 15 für einen erneuten Filtrationsdurchgang.

Der Klarlauf aus dem Wanderschichtreaktor 14 wird über den Filtratauslauf 23 einer etwaigen Nachbehandlung, z. B. einem weiteren, hier nicht dargestellten Wanderschichtreaktor zur Rückgewinnung noch gelöster Metallionen aus dem Klarlauf zugeführt. Die feststoffbeladenen Flüssigkeitsströme aus dem Auslauftrichter 8, dem Sedimentationsgefäß 18 sowie der Vibrationssiebrinne 28 und gegebenenfalls dem Behälter 15, werden über die Suspensionsabzugsleitungen 7, 19, 38 und 31 und über eine Suspensionssammelleitung 33 einem in der Zeichnung nicht näher dargestellten weiteren Sedimentationsbehälter zugeführt, aus dem die Klarflüssigkeit dekantiert und dem Prozeß wieder zugeführt wird, während der abgesetzte Feststoff für eine eventuell erwünschte Rückgewinnung von Wertstoffen genutzt werden kann. Auf diese Weise werden nur Restflüssigkeitsmengen mit einem hohen Feststoffgehalt der Sedimentation unterzogen.

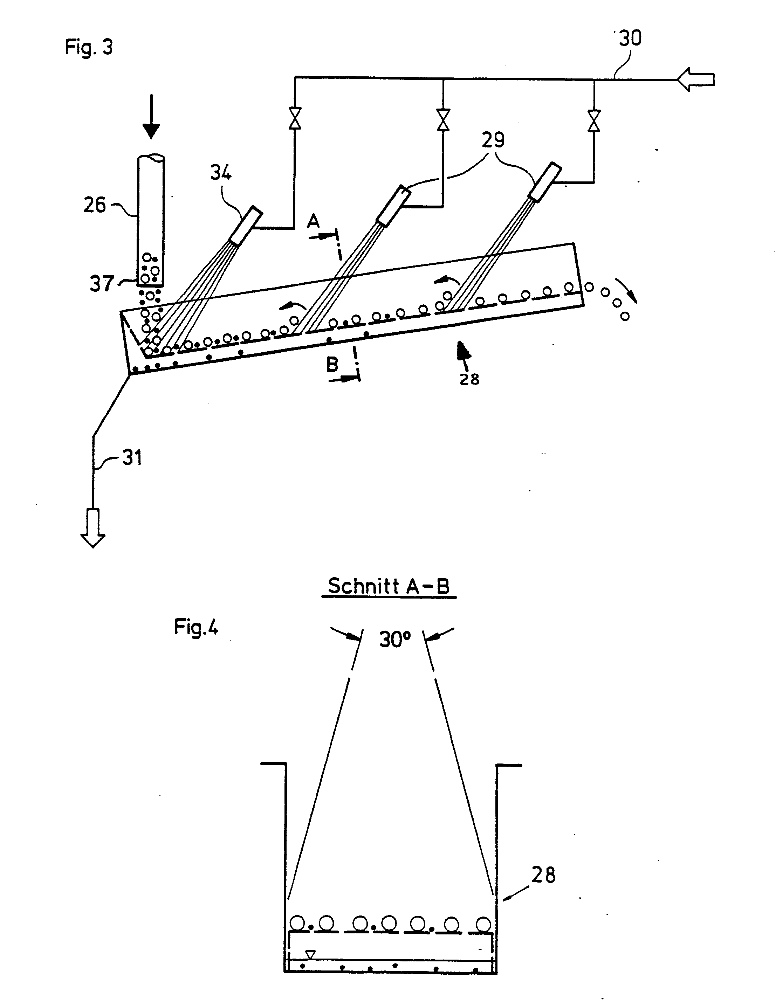

Einzelheiten der Vibrationssiebrinne 28 ergeben sich aus den Figuren 3 und 4. Über z. B. zwei Fächer-Waschdüsen 29, die unter einem Winkel von etwa 45° in unterschiedlichen Längsabständen der Siebrinne 28 für die Granulatbedüsung sorgen, strömen bevorzugt jeweils 20 Vol.-% und über eine Kegel-Waschdüse 34 etwa 60% der Spülflüssigkeit, wobei letztere den Aufgabebereich der Vibrationssiebrinne 28 bedüst, der unterhalb des Auslaufs 37 der Förderleitung 26 liegt.

Versuchsbeispiel

In einer der Fig. 2 entsprechenden Versuchsanlage wurde ein feststoffbelastetes, schwermetallhaltiges Prozeßwasser einer Akkumulatorenfabrik behandelt, wobei für die einzelnen Behandlungsstufen folgende Konstruktionsdaten und Betriebsparameter realisiert wurden :.

Das Prozeßwasser wurde mit einer Durchsatzleistung von 0,8 m³/h durch die verschiedenen Stufen der Versuchsanlage geleitet. Die Feststoffkonzentration im Prozeßwasser betrug einlaßseitig 0,2 bis 1,5 g/l, die Dichte des Feststoffes betrug zwischen 1,5 und 2,5 kg/l. Bei der Feststoffvorabscheidung im Sedimentationsapparat 4 wurden Feststoffpartikel mit einer Partikelgröße im wesentlichen oberhalb 250 Mikrometer abgeschieden. Der lichte Durchmesser des Sedimentationsbehälters 3 betrug 350 mm, der lichte Durchmesser des Sedimentationsapparates 4 war 600 mm, die zylindrische Höhe 750 mm. Pro Stunde wurden etwa 0,1 l des in der Flüssigkeit suspendierten Feststoffes abgeschieden.

Der zylindrische Teil des Wanderschichtreaktors 14 hatte einen Durchmesser von 635 mm, die zylindrische Wanderschichthöhe betrug 1 m, der Granulatinhalt 320 l. Am unteren Ende des Behälters 15 wurden 1,38 l/h Granulat abgezogen und eine entsprechende Menge gereinigten Granulates — ergänzt durch frisches Granulat — wurde dem Behälter 15 oben zugeführt. Das abgeführte Granulat war mit 0,17 kg/l Feststoff beladen.

Der Filterwiderstand des noch nicht mit Feststoffen beladenen Filterbetts 22 betrug 0,007 bar. Der maximale Widerstand der das Filterbett bildenden Granulatschicht 22, bei dem spätestens die Granulate abgelassen und dem Reinigungsprozeß zugeführt werden müssen, wurde mit 0,042 bar ermittelt. Somit konnte der Widerstand des Filterbetts als Steuergröße für das Betreiben des Kreislaufprozesses benutzt werden.

Wegen der in dem Versuch gegebenen Anlagengröße wurde das abgezogene beladene Granulat zunächst gesammelt und nachfolgend pulsierend gefördert und gereinigt wie aus Figur 2 ersichtlich.

Hierzu wurde am unteren Ende einer 1,40 m langen Förderleitung 26 mit einem lichten Durchmesser von 0,03 m Luft bei einem Druck von 2 bar und mit einem Durchsatz von 0,2 m³/h zugeführt. Zusammen mit der mit Granulat beladenen Suspension bildete sich ein Drei-Phasen-Gemisch aus, das mit ca. 0,1 m/s in die Vibrationssiebrinne 28 gefördert wurde. Dort wurde das Granulat mit 107 l/h Waschwasser bedüst. Auf diese Weise konnten pro Stunde 16,5 l Granulat gereinigt werden. Der Abriebverlust war relativ gering. Die Filtrationsleistung des gereinigten Granulates war ebenso gut wie die des frischen Granulates und betrug 99,5 % des der Anlage mit dem Prozeßwasser zugeführten Feststoffes.

1 Trübezulauf
2 Einlauftrichter
3 Sedimentationsbehälter
4 Sedimentationsapparat
5 Einlaufrohr
6 Sedimentationszone
7 Suspensionsabzug
8 Auslauftrichter
9 Überlaufrand
10 Pumpvorlage
11 Auslauf
12 Kreiselpumpe
13 Druckleitung
14 Wanderschichtreaktor
15 Behälter
16 Auslauftrichter
17 Verteiler- und Abzugskegel
18 Sedimentationsgefäß
19 Mittelgutabzug
20 Einströmöffnung
21 Überlauf
22 Granulatschicht
23 Filtratauslauf
24 Granulatzulauf
25 Ansaugleitung
26 Förderleitung
27 Fördergasleitung
28 Vibrationssiebrinne
29 Fächer-Waschdüsen
30 Spülflüssigkeitsleitung
31 Suspensionsablauf
32 Vorratsbehälter
33 Suspensions-Sammelleitung
34 Kegel-Waschdüse
35 Fördergasleitung
36 Granulataufgabe
37 Auslauf Förderleitung
38 Suspensionsabzug

**Patentansprüche**

1. Verfahren zur Abtrennung von Feststoffteilchen aus Trüben mit folgenden Verfahrensschritten :

a) die Trübe wird zum Entgasen tangential einem konischen Einlauftrichter eines Sedimentationsapparates aufgegeben, in dem gröbere Feststoffteilchen abgetrennt werden ;

b) der Überlauf vom Sedimentationsapparat wird einem in einem Wanderschichtreaktor angeordneten Verteiler- und Abzugskegel zugeführt, der zugleich als Mittelgutabscheider ausgebildet ist ;

c) die feingutbeladene Trübe aus dem Verteiler- und Abzugskegel wird zur Filtration im Gegenstrom durch den Wanderschichtreaktor geleitet, der mit einem aus Schwarztorf oder Torfgemischen hergestellten, granulierten porösen Feststoffgranulat gefüllt ist ;

d) das feingutbehaftete Granulat wird kontinuierlich aus der Wanderschicht abgezogen und in einem Vorreinigungsschritt — zum Ablösen eines Teils des Feingutes vom Granulat — pulsierend zu einer Spülvorrichtung gefördert und

e) zur Regenerierung wird das restliche Feingut in der Spülvorrichtung vom Granulat abgespült und das gereinigte Granulat erneut der Wanderschicht — zusammen mit frischem Granulat — zugeführt.

2. Verfahren nach Anspruch 1, dadurch gekennzeichnet, daß das aus Schwarztorf oder Torfgemisch hergestellte Granulat durch Fräsen gewonnen wird, wobei das Rohgut gefroren wird, als Gefriergut zerkleinert und dann durchgemischt wird, das Gemisch auf einem Drehteller unter Wasserzugabe granuliert wird, das Rohgranulat durch Trocknen verfestigt wird und durch Heißwasserbenetzung entlüftet und aufgequollen wird.

3. Verfahren nach Anspruch 1 oder 2, dadurch gekennzeichnet, daß mit filtrierter Flüssigkeit (Klarlauf) gespült wird.

4. Verfahren nach einem oder mehreren der Ansprüche 1 bis 3, dadurch gekennzeichnet, daß der Widerstand des Filterbettes (Granulatschicht) als Steuergröße für den Abzug des beladenen Granulates dient.

5. Vorrichtung nach einem oder mehreren der Ansprüche 1 bis 4, gekennzeichnet durch einen Sedimentationsapparat (4) mit einem tangential beaufschlagten Einlauftrichter (2) zur Grobgutabtrennung, ein nachgeschaltetes Sedimentationsgefäß (18) mit Abzugsvorrichtung (19) für das Mittelgut, dem ein nach oben spitzer, hohler, flüssigkeitsdurchlässiger Verteiler- und Abzugskegel (17) zugeordnet ist, der die Trübe einem Wanderschichtreaktor (14) zur Feingutabscheidung zuführt, sowie ein, durch Zufuhr von Gas über eine Fördergasleitung (27) pulsierend arbeitendes Drei-Phasen-Förder-System (25, 26, 27), das den Granulatauslauf des Wanderschichtreaktors (14) mit einer Spülvorrichtung (28, 29, 34) verbindet.

6. Vorrichtung nach Anspruch 5, dadurch gekennzeichnet, daß die Spülvorrichtung eine ansteigend geneigte Vibrationssiebrinne (28) aufweist.

7. Vorrichtung nach Anspruch 6, gekennzeichnet durch der Siebrinne (28) zugeordnete Düsen (34, 29) für die Spülflüssigkeit.

**Claims**

1. A method of separating solid-material particles from pulps, comprising the following method steps :

a) the pulp is delivered for de-gassing tangentially to a conical admission funnel of a sedimentation apparatus in which large solid particles are separated ;

b) the overflow from the sedimentation apparatus is supplied to a distributor and removal cone which is disposed in a moving bed reactor and which at the same time is constructed as a medium-sized material filter ;

c) the pulp containing fine material from the distributor and removal cone is passed on for filtration in counterflow through the moving bed reactor, which is filled with granulated porous solid-material granulates produced from black peat or mixtures of peat ;

d) the granulates adhering to the fine material are continuously removed from the moving bed and is supplied in a pulsating manner to a rinsing apparatus in a preliminary cleaning stage for detaching part of the fine material from the granulates, and

e) for regeneration the remaining fine material in the rinsing apparatus is rinsed out of the granulates and the cleaned granulates are supplied again to the moving bed — together with fresh granulates.

2. A method according to claim 1, characterized in that the granulates produced from black peat or a mixture of peat are obtained by cutting, the raw material being frozen, comminuted as frozen material and then thoroughly mixed, the mixture being granulated on a rotary plate with the addition of water, and the raw granulates being solidified by drying and de-aerated by wetting with hot water and expanded.

3. A method according to claim 1 or 2, characterized in that rinsing takes place with filtered fluid (clear flow).

4. A method according to one or more of claims 1 to 3, characterized in that the resistance of the filter bed (granulate layer) acts as a control value for the removal of the loaded granulates.

5. Apparatus according to one or more of claims 1 to 4, characterized by a sedimentation apparatus (4) with a inlet funnel (2) which is acted upon tangentially for separating large material, a sedimentation tank (18) arranged downstream with a removal apparatus (19) for medium-sized material, with which is associated a hollow, fluid-permeable distributor and removal cone (17) which is pointed at the top and which conveys the pulp to a moving layer reactor (14) for separating fine material, and a three-phase supply system (25, 26, 27) which operates in a pulsating manner by the supply of gas by way of a gas supply line (27) and which connects the granulates discharge of the moving bed reactor (14) to a rinsing apparatus (28, 29, 34).

6. Apparatus according to claim 5, characterized in that the rinsing apparatus comprises a vibration sifter channel (28) inclined in an ascending manner.

7. An apparatus according to Claim 6, characterized by nozzles (34, 29) — associated with the sifter channel (28) — for the rinsing fluid.

## Revendications

1. Procédé pour la séparation des particules solides en suspension dans un liquide, qui combine les stades opératoires ci-après :

a) la suspension de particules est introduite tangentiellement dans l'entonnoir d'alimentation d'un appareil de sédimentation, où elle est dégazée et où les particules les plus grossières sont séparées ;

b) le trop-plein de l'appareil de sédimentation est amené dans un cône de distribution et d'évacuation, disposé dans un réacteur à couche migrante et agissant également comme séparateur des particules moyennes ;

c) le liquide quittant le cône de distribution et d'évacuation, c'est-à-dire la suspension contenant les particules les plus fines, est filtré par passage à travers le réacteur à couche migrante, contenant un produit granulé solide poreux, préparé à partir de tourbe de fagne (tourbe noire) ou d'un mélange de tourbes ;

d) le produit granulé chargé des fines particules est soutiré en continu du réacteur à couche migrante et une fraction des fines particules en est détachée dans une opération de pré-purification par un transport pulsé vers une installation de rinçage ;

e) le produit granulé est régénéré par l'élimination des fines particules résiduelles par lavage dans l'installation de rinçage et recyclé avec du produit granulé frais dans la couche migrante.

2. Procédé suivant la revendication 1, caractérisé en ce que le produit granulé est préparé à partir de tourbe noire ou d'un mélange de tourbes par congélation de la matière brute (ou des matières brutes), concassage de la masse congelée, homogénéisation et granulation sur un plateau rotatif avec addition d'eau, le produit granulé brut étant consolidé par séchage, puis dégazé et gonflé en l'humidifiant avec de l'eau chaude.

3. Procédé suivant la revendication 1 ou la revendication 2, caractérisé en ce que le rinçage est réalisé avec du liquide filtré (clarifié).

4. Procédé suivant l'une ou plusieurs des revendications 1 à 3, caractérisé en ce que la résistance du lit filtrant (couche de produit granulé) est utilisée pour régler le soutirage du produit granulé chargé.

5. Installation (pour le procédé) suivant l'une ou plusieurs des revendications 1 à 4, caractérisée en ce qu'elle comprend un appareil de sédimentation (4) avec un entonnoir d'alimentation (2), alimenté tangentiellement, pour la séparation des particules les plus grossières, et disposé en aval de celui-ci, un réservoir de sédimentation (18) avec un dispositif de soutirage (19) des particules moyennes, combiné avec un cône de distribution et d'évacuation (17) creux, perméable aux liquides, dont la pointe est tournée vers le haut, à travers lequel la suspension des particules résiduelles est amenée dans un réacteur à couche migrante (14), dans lequel sont séparées les fines particules, ainsi qu'un système de transport à trois phases (25, 26, 27), qui fonctionne de manière pulsée par l'introduction d'un gaz transporteur par un conduit (27) et qui relie la sortie du produit granulé du réacteur à couche migrante (14) à une installation de rinçage (28, 29, 34).

6. Installation suivant la revendication 5, caractérisée en ce que l'installation de rinçage comprend une rigole de filtration vibrante (28).

7. Installation suivant la revendication 6, caractérisée en ce que la rigole de filtration (28) est surmontée de buses (34, 29) de distribution du liquide de rinçage.

Fig.1

Abzug u. Förderung mit Feststoffabtrennung

Absiebung u. Wäsche

entgaste Luft

verschmutztes Granulat

gereinigtes Granulat

feststofffreies Prozeßwasser zur Nachbehandlung

Vorabscheidung u. Entgasung

Wanderschicht-Filter ( mit Schwarztorfgranulat)

Prozeßwasser

"grober" Feststoff

Feststoff aus Verteiler- und Abzugskegel

Feststoff- suspension

Feststoff- suspension zur Sedimentation

0 121 143

Fig. 2

0 121 143

Fig. 3

30

26

34

29

37

A

B

28

31

## Schnitt A-B

Fig. 4

30°

28